(19)

Europäisches
Patentamt
European
Patent Office
Office européen
des brevets

(11) **EP 3 699 867 A1**

(12) **EUROPEAN PATENT APPLICATION**

(43) Date of publication:
**26.08.2020 Bulletin 2020/35**

(51) Int Cl.:
***G06T 9/00*** *(2006.01)*

(21) Application number: **20154219.8**

(22) Date of filing: **29.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2019 FI 20195129**

(71) Applicant: **Nokia Technologies Oy
02610 Espoo (FI)**

(72) Inventors:
• **AFLAKI BENI, Payman
33710 Tampere (FI)**
• **SCHWARZ, Sebastian
82008 Unterhaching (DE)**

(74) Representative: **Nokia EPO representatives
Nokia Technologies Oy
Karakaari 7
02610 Espoo (FI)**

(54) **AN APPARATUS, A METHOD AND A COMPUTER PROGRAM FOR VOLUMETRIC VIDEO**

(57)     A method comprising: projecting a 3D representation of an object onto at least one 2D patch; arranging all pixels of said at least one 2D patch onto a first rectangular 2D block grid having a first size; examining whether a removal of a maximum of a predetermined number of pixels from said at least one 2D patch enables arranging all pixels of said at least one 2D patch onto a second rectangular 2D block grid having a second size smaller than the first size; and if affirmative reducing the size of said at least one 2D patch by removing at maximum said predetermined number of pixels.

Project a 3D representation of an object onto
at least one 2D patch (400)

Arrange all pixels of said at least one 2D patch onto a first
rectangular 2D block grid having a first size (402)

Examine if a removal of a maximum of a predetermined number of
pixels from said at least one 2D patch enables arranging all pixels of
said at least one 2D patch onto a second rectangular 2D block grid
having a second size smaller than the first size (404)

Reduce the size of said at least one 2D patch by removing
at maximum said predetermined number of pixels (406)

Fig. 4

EP 3 699 867 A1

## Description

### TECHNICAL FIELD

The present invention relates to an apparatus, a method and a computer program for volumetric video coding.

### BACKGROUND

Volumetric video data represents a three-dimensional scene or object and can be used as input for virtual reality (VR), augmented reality (AR) and mixed reality (MR) applications. Such data describes the geometry, e.g. shape, size, position in three-dimensional (3D) space, and respective attributes, e.g. colour, opacity, reflectance and any possible temporal changes of the geometry and attributes at given time instances. Volumetric video is either generated from 3D models through computer-generated imagery (CGI), or captured from real-world scenes using a variety of capture solutions, e.g. multi-camera, laser scan, combination of video and dedicated depth sensors, and more. Also, a combination of CGI and real-world data is possible.

Typical representation formats for such volumetric data are triangle meshes, point clouds (PCs), or voxel arrays. Point clouds are well suited for applications such as capturing real world 3D scenes where the topology is not necessarily a 2D manifold. A point cloud frame may be defined as a point cloud corresponding to a particular time instant; for example, the point cloud may have been captured at that time instant. Successive point cloud frames may be considered to form a point cloud sequence or point cloud video.

In dense point clouds or voxel arrays, the reconstructed 3D scene may contain tens or even hundreds of millions of points. One way to compress a time-varying volumetric scene/object is to project 3D surfaces to some number of pre-defined 2D planes. Regular 2D video compression algorithms can then be used to compress various aspects of the projected surfaces. For e.g. a time-varying 3D point cloud, with spatial and texture coordinates, can be mapped into a sequence of at least two sets of planes, where one of the two sets carry the texture data and the other carries the distance of the mapped 3D surface points from the projection planes. Each projected patch is put on a 2D grid and encoded/decoded. In the decoder, the decoded patches are used to re-project the 2D content back into 3D space for rendering.

However, in volumetric video the amount of data to be encoded onto the 2D grid may be vast. The infrastructure capabilities and bandwidth limitations on content providing systems may easily become a bottleneck, and therefore, there is a need to reduce the amount of data to be transmitted.

## SUMMARY

Now, an improved method and technical equipment implementing the method has been invented, by which the above problems are alleviated. Various aspects include a method, an apparatus and a computer readable medium comprising a computer program or a signal stored therein, which are characterized by what is stated in the independent claims. Various details of the embodiments are disclosed in the dependent claims and in the corresponding images and description.

According to a first aspect, there is provided a method comprising projecting a 3D representation of at least one object onto at least one 2D patch; arranging all pixels of said at least one 2D patch onto a first rectangular 2D block grid having a first size; examining whether a removal of a maximum of a predetermined number of pixels from said at least one 2D patch enables arranging all pixels of said at least one 2D patch onto a second rectangular 2D block grid having a second size smaller than the first size; and if affirmative, reducing the size of said at least one 2D patch by removing at maximum said predetermined number of pixels.

An apparatus according to a second aspect comprises means for projecting a 3D representation of at least one object onto at least one 2D patch; means for arranging all pixels of said at least one 2D patch onto a first rectangular 2D block grid having a first size; means for examining whether a removal of a maximum of a predetermined number of pixels from said at least one 2D patch enables arranging all pixels of said at least one 2D patch onto a second rectangular 2D block grid having a second size smaller than the first size; and means for reducing the size of said at least one 2D patch by removing at maximum said predetermined number of pixels.

According to an embodiment, the size of the rectangular 2D block grids is defined as 2N x 2M, where N and M are positive integer values.

According to an embodiment, the apparatus further comprises means for determining the maximum of the predetermined number of pixels per patch by an algorithm.

According to an embodiment, the apparatus further comprises means for applying a shifting or a rotation to the reduced sized 2D patch for arranging said reduced sized 2D patch into the second rectangular 2D block grid.

According to an embodiment, the apparatus further comprises means for removing said pixels from a plurality of locations of said at least one 2D patch.

According to an embodiment, the apparatus further comprises means for determining if the removed pixels are relevant for reconstructing the content of the patch; and means for including, in or along the bitstream, instructions for a decoder to reconstruct the content of the patch.

According to an embodiment, said instructions for reconstructing the content of the patch indicates one or more of the following: the location, size, shape, orientation, direction, rotation of the removed pixels.

A method according to a third aspect comprises: receiving a bitstream in a decoder; decoding reduced content of at least one 2D patch; decoding instructions for reconstructing original content of the at least one 2D patch; reconstructing the original content of the at least one 2D patch by adding one or more pixels to the reduced content based on said instructions; and reconstructing a 3D representation of at least one object based on the at least one reconstructed 2D patch.

An apparatus according to a fourth aspect comprises: means for receiving a bitstream in a decoder; means for decoding reduced content of at least one 2D patch; means for decoding instructions for reconstructing original content of the at least one 2D patch; means for reconstructing the original content of the at least one 2D patch by adding one or more pixels to the reduced content based on said instructions; and means for reconstructing a 3D representation of at least one object based on the at least one reconstructed 2D patch.

Apparatuses according to further aspects comprise at least one processor and at least one memory, said at least one memory stored with code thereon, when executed by said at least one processor, causes the apparatus to perform the above methods.

Computer readable storage media according to further aspects comprise code for use by an apparatus, which when executed by a processor, causes the apparatus to perform the above methods.

Further aspects relate at least to an apparatus and computer readable storage medium with computer program code comprising means for performing the above methods and embodiments related thereto.

## BRIEF DESCRIPTION OF THE DRAWINGS

For a more complete understanding of the example embodiments, reference is now made to the following descriptions taken in connection with the accompanying drawings in which:

Figs. 1a and 1b show an encoder and decoder for encoding and decoding 2D pictures;
Figs. 2a and 2b show a compression and a decompression process for a point cloud frame encoding;
Fig. 3 shows different transversal order for sub-blocks of an occupancy map;
Fig. 4 shows a flow chart for patch resizing according to an embodiment;
Fig. 5 shows two examples of a patch and a block grid of pixels representing the patch;
Fig. 6 shows an example of removal of pixels of the patch according to an embodiment
Fig. 7 shows an example of combined removal of pixels and shifting of the patch according to an embodiment;
Fig. 8 shows an example of removal of pixels at two non-adjacent locations of the patch according to an embodiment; and
Fig. 9 shows a flow chart for reconstructing resized patches according to an embodiment.

## DETAILED DESCRIPTON OF SOME EXAMPLE EMBODIMENTS

In the following, several embodiments of the invention will be described in the context of point cloud models for volumetric video coding. It is to be noted, however, that the invention is not limited to specific scene models or specific coding technologies. In fact, the different embodiments have applications in any environment where coding of volumetric scene data is required.

A video codec comprises an encoder that transforms the input video into a compressed representation suited for storage/transmission, and a decoder that can uncompress the compressed video representation back into a viewable form. An encoder may discard some information in the original video sequence in order to represent the video in a more compact form (i.e. at lower bitrate).

Volumetric video may be captured using one or more three-dimensional (3D) cameras. When multiple cameras are in use, the captured footage is synchronized so that the cameras provide different viewpoints to the same world. In contrast to traditional 2D/3D video, volumetric video describes a 3D model of the world where the viewer is free to move and observer different parts of the world.

Volumetric video enables the viewer to move in six degrees of freedom (6DOF): in contrast to common 360° video, where the user has from 2 to 3 degrees of freedom (yaw, pitch, and possibly roll), a volumetric video represents a 3D volume of space rather than a flat image plane. Volumetric video frames contain a large amount of data because they model the contents of a 3D volume instead of just a two-dimensional (2D) plane. However, only a relatively small part of the volume changes over time. Therefore, it may be possible to reduce the total amount of data by only coding information about an initial state and changes which may occur between frames. Volumetric video can be rendered from synthetic 3D animations, reconstructed from multi-view video using 3D reconstruction techniques such as structure from motion, or captured with a combination of cameras and depth sensors such as LiDAR (Light Detection and Ranging), for example.

Volumetric video data represents a three-dimensional scene or object, and thus such data can be viewed from any viewpoint. Volumetric video data can be used as an input for augmented reality (AR), virtual reality (VR) and mixed reality (MR) applications. Such data describes geometry (shape, size, position in 3D-space) and respective attributes (e.g. color, opacity, reflectance, ...), together with any possible temporal changes of the geometry and attributes at given time instances (e.g. frames in 2D video). Volumetric video is either generated from 3D models, i.e. computer-generated imagery (CGI), or captured from real-world scenes using a variety of capture solutions, e.g. a multi-camera, a laser scan, a combination of video and dedicated depths sensors, etc. Also, a combination of CGI and real-world data is possible. Examples of representation formats for such volumetric data are triangle meshes, point clouds, or voxel. Temporal information about the scene can be included in the form of individual capture instances, i.e. "frames" in 2D video, or other means, e.g. position of an object as a function of time.

Increasing computational resources and advances in 3D data acquisition devices has enabled reconstruction of highly detailed volumetric video representations of natural scenes. Infrared, lasers, time-of-flight and structured light are all examples of devices that can be used to construct 3D video data. Representation of the 3D data depends on how the 3D data is used. Dense voxel arrays have been used to represent volumetric medical data. In 3D graphics, polygonal meshes are extensively used. Point clouds on the other hand are well suited for applications, such as capturing real world 3D scenes where the topology is not necessarily a 2D manifold. Another way to represent 3D data is coding this 3D data as a set of texture and depth map as is the case in the multi-view plus depth. Closely related to the techniques used in multi-view plus depth is the use of elevation maps, and multi-level surface maps.

In 3D point clouds, each point of each 3D surface is described as a 3D point with color and/or other attribute information such as surface normal or material reflectance. Point cloud is a set of data points in a coordinate system, for example in a three-dimensional coordinate system being defined by X, Y, and Z coordinates. The points may represent an external surface of an object in the screen space, e.g. in a three-dimensional space.

In dense point clouds or voxel arrays, the reconstructed 3D scene may contain tens or even hundreds of millions of points. If such representations are to be stored or interchanged between entities, then efficient compression of the presentations becomes fundamental. Standard volumetric video representation formats, such as point clouds, meshes, voxel, suffer from poor temporal compression performance. Identifying correspondences for motion-compensation in 3D-space is an ill-defined problem, as both, geometry and respective attributes may change. For example, temporal successive "frames" do not necessarily have the same number of meshes, points or voxel. Therefore, compression of dynamic 3D scenes is inefficient. 2D-video based approaches for compressing volumetric data, i.e. multiview with depth, have much better compression efficiency, but rarely cover the full scene. Therefore, they provide only limited 6DOF capabilities.

Instead of the above-mentioned approach, a 3D scene, represented as meshes, points, and/or voxel, can be projected onto one, or more, geometries. These geometries may be "unfolded" or packed onto 2D planes (two planes per geometry: one for texture, one for depth), which are then encoded using standard 2D video compression technologies. Relevant projection geometry information may be transmitted alongside the encoded video files to the decoder. The decoder decodes the video and performs the inverse projection to regenerate the 3D scene in any desired representation format (not necessarily the starting format).

Projecting volumetric models onto 2D planes allows for using standard 2D video coding tools with highly efficient temporal compression. Thus, coding efficiency can be increased greatly. Using geometry-projections instead of 2D-video based approaches based on multiview and depth, provides a better coverage of the scene (or object). Thus, 6DOF capabilities are improved. Using several geometries for individual objects improves the coverage of the scene further. Furthermore, standard video encoding hardware can be utilized for real-time compression/decompression of the projected planes. The projection and the reverse projection steps are of low complexity.

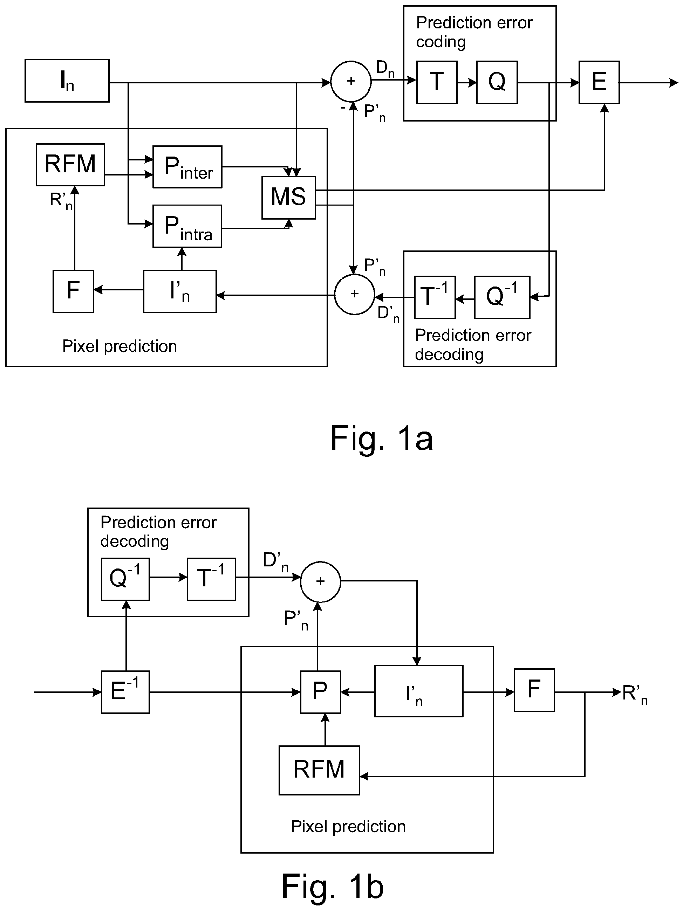

Figs. 1a and 1b show an encoder and decoder for encoding and decoding the 2D texture pictures, geometry pictures and/or auxiliary pictures. A video codec consists of an encoder that transforms an input video into a compressed representation suited for storage/transmission and a decoder that can uncompress the compressed video representation back into a viewable form. Typically, the encoder discards and/or loses some information in the original video sequence in order to represent the video in a more compact form (that is, at lower bitrate). An example of an encoding process is illustrated in Figure 1a. Figure 1a illustrates an image to be encoded ($I^n$); a predicted representation of an image block ($P'^n$); a prediction error signal ($D^n$); a reconstructed prediction error signal ($D'^n$); a preliminary reconstructed image ($I'^n$); a final reconstructed image ($R'^n$); a transform (T) and inverse transform ($T^{-1}$); a quantization (Q) and inverse quantization ($Q^{-1}$); entropy encoding (E); a reference frame memory (RFM); inter prediction ($P_{inter}$); intra prediction ($P_{intra}$); mode selection (MS) and filtering (F).

An example of a decoding process is illustrated in Figure 1b. Figure 1b illustrates a predicted representation of an image block ($P'^n$); a reconstructed prediction error signal ($D'^n$); a preliminary reconstructed image ($I'^n$); a final reconstructed image ($R'^n$); an inverse transform ($T^{-1}$); an inverse quantization ($Q^{-1}$); an entropy decoding ($E^{-1}$); a reference frame memory (RFM); a prediction (either inter or intra) (P); and filtering (F).

Many hybrid video encoders encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate). Video codecs may also provide a transform skip mode, which the encoders may choose to use. In the transform skip mode, the prediction error is coded in a sample domain, for example by deriving a sample-wise difference value relative to certain adjacent samples and coding the sample-wise difference value with an entropy coder.

Many video encoders partition a picture into blocks along a block grid. For example, in the High Efficiency Video Coding (HEVC) standard, the following partitioning and definitions are used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples. A CU with the maximum allowed size may be named as LCU (largest coding unit) or coding tree unit (CTU) and the video picture is divided into non-overlapping LCUs.

In HEVC, a picture can be partitioned in tiles, which are rectangular and contain an integer number of LCUs. In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

Entropy coding/decoding may be performed in many ways. For example, context-based coding/decoding may be applied, where in both the encoder and the decoder modify the context state of a coding parameter based on previously coded/decoded coding parameters. Context-based coding may for example be context adaptive binary arithmetic coding (CABAC) or context-based variable length coding (CAVLC) or any similar entropy coding. Entropy coding/decoding may alternatively or additionally be performed using a variable length coding scheme, such as Huffman coding/decoding or Exp-Golomb coding/decoding. Decoding of coding parameters from an entropy-coded bitstream or codewords may be referred to as parsing.

The phrase along the bitstream (e.g. indicating along the bitstream) may be defined to refer to out-of-band transmission, signalling, or storage in a manner that the out-of-band data is associated with the bitstream. The phrase decoding along the bitstream or alike may refer to decoding the referred out-of-band data (which may be obtained from out-of-band transmission, signalling, or storage) that is associated with the bitstream. For example, an indication along the bitstream may refer to metadata in a container file that encapsulates the bitstream.

A first texture picture may be encoded into a bitstream, and the first texture picture may comprise a first projection of texture data of a first source volume of a scene model onto a first projection surface. The scene model may comprise a number of further source volumes.

In the projection, data on the position of the originating geometry primitive may also be determined, and based on this determination, a geometry picture may be formed. This may happen for example so that depth data is determined for each or some of the texture pixels of the texture picture. Depth data is formed such that the distance from the originating geometry primitive such as a point to the projection surface is determined for the pixels. Such depth data may be represented as a depth picture, and similarly to the texture picture, such geometry picture (such as a depth picture) may be encoded and decoded with a video codec. This first geometry picture may be seen to represent a mapping of the first projection surface to the first source volume, and the decoder may use this information to determine the location of geometry primitives in the model to be reconstructed. In order to determine the position of the first source volume and/or the first projection surface and/or the first projection in the scene model, there may be first geometry information encoded into or along the bitstream.

An attribute picture may be defined as a picture that comprises additional information related to an associated texture picture. An attribute picture may for example comprise surface normal, opacity, or reflectance information for a texture picture. A geometry picture may be regarded as one type of an attribute picture, although a geometry picture may be treated as its own picture type, separate from an attribute picture.

Texture picture(s) and the respective geometry picture(s), if any, and the respective attribute picture(s) may have the same or different chroma format.

Terms texture image and texture picture may be used interchangeably. Terms geometry image and geometry picture may be used interchangeably. A specific type of a geometry image is a depth image. Embodiments described in relation to a geometry image equally apply to a depth image, and embodiments described in relation to a depth image equally apply to a geometry image. Terms attribute image and attribute picture may be used interchangeably. A geometry picture and/or an attribute picture may be treated as an auxiliary picture in video/image encoding and/or decoding.

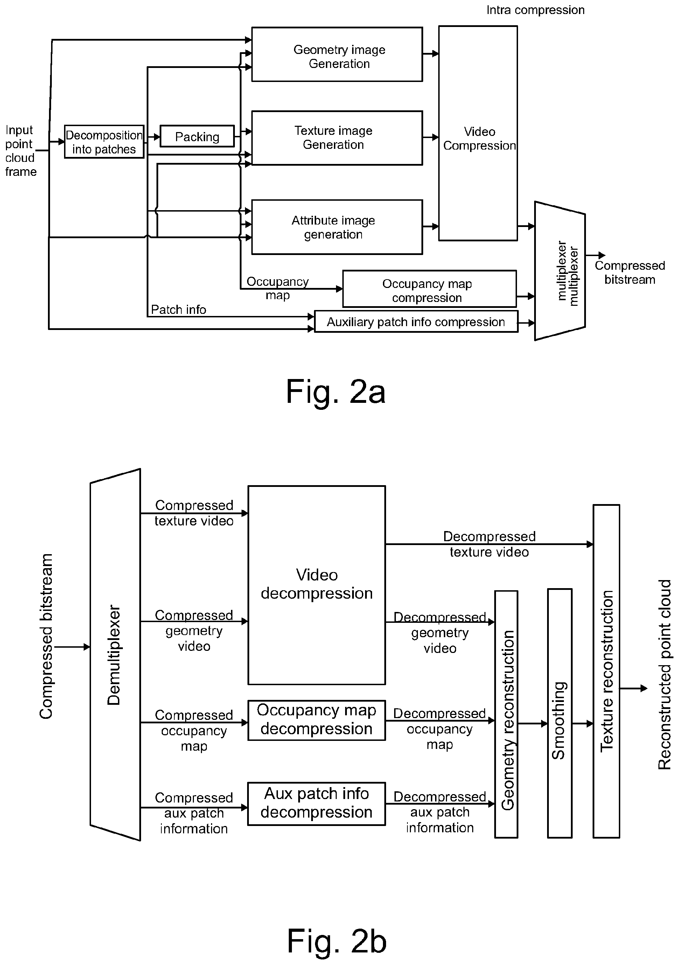

Figures 2a and 2b illustrate an overview of exemplified compression/ decompression processes. The processes may be applied, for example, in Point Cloud Coding (PCC) according to MPEG standard. MPEG Point Cloud Coding, Category 2, Test Model a.k.a. TMC2v0 (MPEG W17248) discloses a projection-based approach for dynamic point cloud compression. For the sake of illustration, some of the processes related to TMC2v0 compression/decompression are described briefly herein. For a comprehensive description of the model, a reference is made to MPEG W17248.

The patch generation process aims at decomposing the point cloud into a minimum number of patches with smooth boundaries, while also minimizing the reconstruction error. In TMC2v0, the following approach is implemented.

First, the normal at every point is estimated and an initial clustering of the point cloud is then obtained by associating each point with one of the following six oriented planes, defined by their normal. More precisely, each point is associated with the plane that has the closest normal (i.e., maximizes the dot product of the point normal and the plane normal).

The initial clustering is then refined by iteratively updating the cluster index associated with each point based on its normal and the cluster indices of its nearest neighbors. The final step consists of extracting patches by applying a connected component extraction procedure.

The packing process aims at mapping the extracted patches onto a 2D grid while trying to minimize the unused space, and guaranteeing that every TxT (e.g., 16x16) block of the grid is associated with a unique patch. Herein, T is a user-defined parameter that is encoded in the bitstream and sent to the decoder.

TMC2v0 uses a simple packing strategy that iteratively tries to insert patches into a WxH grid. W and H are user defined parameters, which correspond to the resolution of the geometry/texture images that will be encoded. The patch location is determined through an exhaustive search that is performed in raster scan order. The first location that can guarantee an overlapping-free insertion of the patch is selected and the grid cells covered by the patch are marked as used. If no empty space in the current resolution image can fit a patch then the height H of the grid is temporarily doubled and search is applied again. At the end of the process, H is clipped so as to fit the used grid cells.

The image generation process exploits the 3D to 2D mapping computed during the packing process to store the geometry and texture of the point cloud as images. In order to better handle the case of multiple points being projected to the same pixel, each patch is projected onto two images, referred to as layers. More precisely, let H(u,v) be the set of points of the current patch that get projected to the same pixel (u, v). The first layer, also called the near layer, stores the point of H(u,v) with the lowest depth D0. The second layer, referred to as the far layer, captures the point of H(u,v) with the highest depth within the interval [D0, D0+$\Delta$], where $\Delta$ is a user-defined parameter that describes the surface thickness.

The generated videos have the following characteristics: geometry: WxH YUV420-8bit, where the geometry video is monochromatic, and texture: WxH YUV420-8bit, where the texture generation procedure exploits the reconstructed/smoothed geometry in order to compute the colors to be associated with the re-sampled points.

The padding process aims at filling the empty space between patches in order to generate a piecewise smooth image suited for video compression. TMC2v0 uses a simple padding strategy, which proceeds as follows:

- Each block of TxT (e.g., 16x16) pixels is processed independently.
- If the block is empty (i.e., all its pixels belong to empty space), then the pixels of the block are filled by copying either the last row or column of the previous TxT block in raster order.
- If the block is full (i.e., no empty pixels), nothing is done.
- If the block has both empty and filled pixels (i.e. a so-called edge block), then the empty pixels are iteratively filled with the average value of their non-empty neighbors.

The generated images/layers are stored as video frames and compressed using a video codec.

In the auxiliary patch information compression, the following meta data is encoded/decoded for every patch:

- Index of the projection plane

  ○ Index 0 for the normal planes (1.0, 0.0, 0.0) and (-1.0, 0.0, 0.0)
  ○ Index 1 for the normal planes (0.0, 1.0, 0.0) and (0.0, -1.0, 0.0)
  ○ Index 2 for the normal planes (0.0, 0.0, 1.0) and (0.0, 0.0, -1.0).

- 2D bounding box (u0, v0, u1, v1)
- 3D location (x0, y0, z0) of the patch represented in terms of depth $\delta 0$, tangential shift s0 and bi-tangential shift r0. According to the chosen projection planes, ($\delta 0$, s0, r0) are computed as follows:

  ○ Index 0, $\delta 0$= x0, s0=z0 and r0 = y0
  ○ Index 1, $\delta 0$= y0, s0=z0 and r0 = x0
  ○ Index 2, $\delta 0$= z0, s0=x0 and r0 = y0

Also, mapping information providing for each TxT block its associated patch index is encoded as follows:

- For each TxT block, let L be the ordered list of the indexes of the patches such that their 2D bounding box contains that block. The order in the list is the same as the order used to encode the 2D bounding boxes. L is called the list of candidate patches.
- The empty space between patches is considered as a patch and is assigned the special index 0, which is added to the candidate patches list of all the blocks.
- Let I be index of the patch to which belongs the current TxT block and let J be the position of I in L. Instead of explicitly encoding the index I, its position J is arithmetically encoded instead, which leads to better compression efficiency.

The occupancy map consists of a binary map that indicates for each cell of the grid whether it belongs to the empty space or to the point cloud. Herein, one cell of the 2D grid produces a pixel during the image generation process. When considering an occupancy map as an image, it may be considered to comprise occupancy patches. Occupancy patches may be considered to have block-aligned edges according to the auxiliary information described in the previous section. An occupancy patch hence comprises occupancy information for a corresponding texture and geometry patches.

The occupancy map compression leverages the auxiliary information described in previous section, in order to detect the empty TxT blocks (i.e., blocks with patch index 0). The remaining blocks are encoded as follows.

The occupancy map could be encoded with a precision of a B0xB0 blocks. B0 is a user-defined parameter. In order to achieve lossless encoding, B0 should be set to 1. In practice B0=2 or B0=4 result in visually acceptable results, while significantly reducing the number of bits required to encode the occupancy map.

The compression process proceeds as follows:

- Binary values are associated with B0xB0 sub-blocks belonging to the same TxT block. A value 1 is associated with a sub-block, if it contains at least a non-padded pixel, and 0 otherwise. If a sub-block has a value of 1 it is said to be full, otherwise it is an empty sub-block.
- If all the sub-blocks of a TxT block are full (i.e., have value 1). The block is said to be full. Otherwise, the block is said to be non-full.
- A binary information is encoded for each TxT block to indicate whether it is full or not.
- If the block is non-full, an extra information indicating the location of the full/empty sub-blocks is encoded as follows:

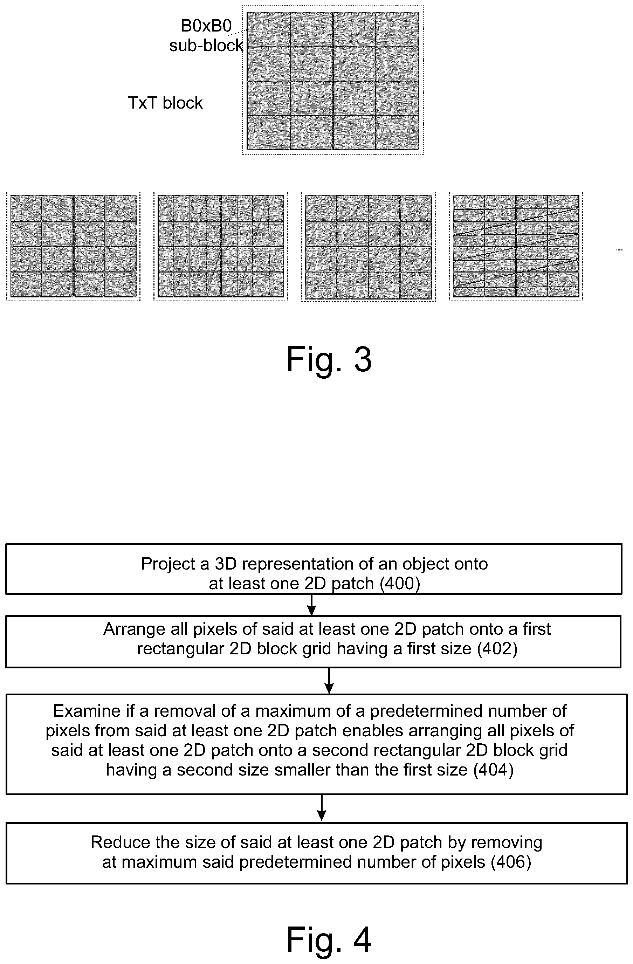

  ○ Different traversal orders are defined for the sub-blocks. Figure 3 **Error! Reference source not found.**shows examples of traversal orders for the sub-blocks.
  ○ The encoder chooses one of the traversal orders and explicitly signals its index in the bitstream.
  ○ The binary values associated with the sub-blocks are encoded by using a run-length encoding strategy.

  • The binary value of the initial sub-block is encoded.
  • Continuous runs of 0s and 1s are detected, while following the traversal order selected by the encoder.
  • The number of detected runs is encoded.
  • The length of each run, except of the last one, is also encoded.

The point cloud geometry reconstruction process exploits the occupancy map information in order to detect the non-empty pixels in the geometry/texture images/layers. The 3D positions of the points associated with those pixels are computed by levering the auxiliary patch information and the geometry images. More precisely, let P be the point associated with the pixel (u, v) and let ($\delta 0$, s0, r0) be the 3D location of the patch to which it belongs and (u0, v0, u1, v1) its 2D bounding box. P could be expressed in terms of depth $\delta$ (u, v), tangential shift s(u, v) and bi-tangential shift r(u, v) as follows:

$$\delta(u, v) = \delta 0 + g(u, v)$$

$$s(u, v) = s0 - u0 + u$$

$$r(u, v) = r0 - v0 + v$$

where g(u, v) is the luma component of the geometry image.

The smoothing procedure aims at alleviating potential discontinuities that may arise at the patch boundaries due to compression artifacts. The implemented approach moves boundary points to the centroid of their nearest neighbors.

In the texture reconstruction process, the texture values are directly read from the texture images.

Thus, a time-varying volumetric scene/object can be compressed by projecting 3D surfaces on to some number of pre-defined 2D planes. Regular 2D video compression algorithms can then be used to compress various aspects of the projected surfaces. For e.g. a time-varying 3D point cloud, with spatial and texture coordinates, can be mapped into a sequence of at least two sets of planes, where one of the two sets carry the texture data and the other carries the distance of the mapped 3D surface points from the projection planes. Each projected patch is put on a 2D grid and encoded/decoded. In the decoder, the decoded patches are used to re-project the 2D content back into 3D space for rendering.

However, in volumetric video the amount of data to be encoded onto the 2D grid may be vast. The infrastructure capabilities and bandwidth limitations on content providing systems may easily become a bottleneck, and therefore, there is a need to reduce the amount of data to be transmitted.

In the following, an enhanced method for point cloud video or image coding will be described in more detail, in accordance with various embodiments. The method can be applied to either or both of intra coding and inter coding of point cloud frames, i.e. intra (I) pictures or slices and inter (P or B) pictures or slices. It is further noted that any 3D object or scene can be converted into a point cloud frame or a 3D mesh as part of the input process. Consequently, while the input process in the following refers to point clouds as an illustrative example, it is noted that any 3D representation of an object may be used, since the projection is independent from the content.

A starting point for the method may be considered, for example, that a 3D representation of at least one object, such as a point cloud frame or a 3D mesh, is input in an encoder. The method, which is disclosed in Figure 4, comprises projecting (400) the 3D representation of the object (represented e.g. by a point cloud frame or a 3D mesh) onto at least one 2D patch; arranging (402) all pixels of said at least one 2D patch onto a first rectangular 2D block grid having a first size; examining (404) whether a removal of a maximum of a predetermined number of pixels from said at least one 2D patch enabled arranging all pixels of said at least one 2D patch onto a second rectangular 2D block grid having a second size smaller than the first size; and if affirmative, reducing (406) the size of said at least one 2D patch by removing at maximum said predetermined number of pixels.

Thus, the projected 2D patch refers to the 3D volume surfaces projected from different parts/segments of the 3D scene/model to the projection planes. The 2D block grid refers to the 2D grid image where the projected patches are located. Each patch is assessed individually and based on the content and the shape of the patch, it is decided whether or not to reduce the size of the patch. A threshold value, i.e. a maximum of a predetermined number of pixels, may be used as criteria for deciding whether or not to reduce the size of the patch. The threshold value may be static or it may be dynamically adjusted for each patch, as explained further below. The pixels to be removed from the patch may be referred to as "separated pixels" in the patch. The presence of "separated pixels" causes the shape and/or the size of the patch to be projected on a rectangular 2D block grid, which is larger than the rectangular 2D block grid where the patch could be arranged in without these "separated pixels". In other words, by removing the "separated pixels" from the patch, the patch can be arranged in a reduced size of rectangular 2D block grid, thereby enabling to reduce the amount of data to be transmitted.

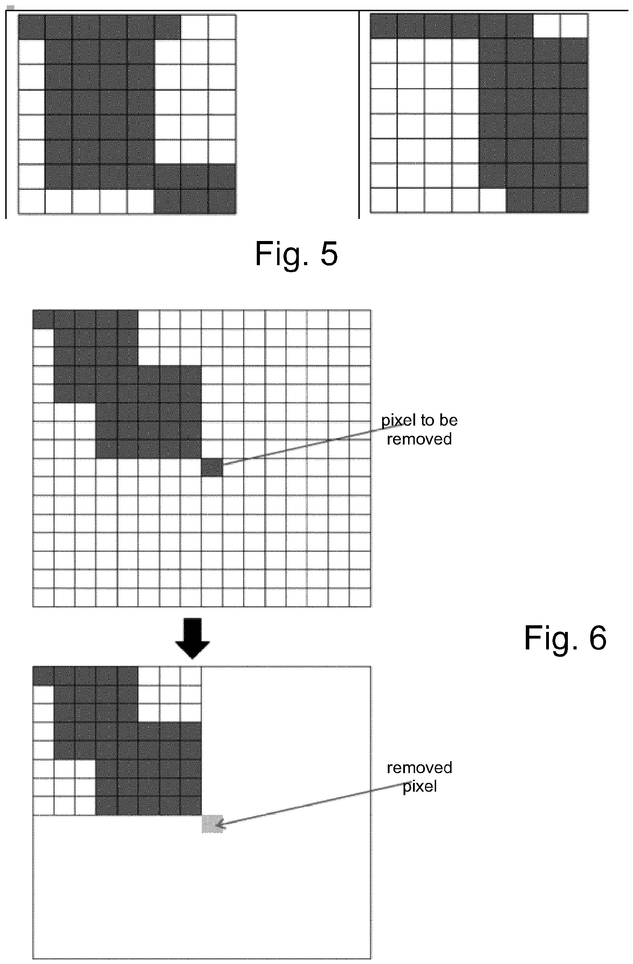

Figure 5 shows two examples of a patch and the block of pixels representing the patch, where the dark pixels (cells) represent the patch pixels and the whole table represents the block of pixels including the patch.

According to an embodiment, the size of the rectangular 2D block grids is defined as $2^N \times 2^M$, where N and M are positive integer values. Thus, when defining a group of pixels representing (covering) a patch, there may be some cases where by removing one or more pixels ($n$ pixels), the size of the group of pixels can be reduced. For example, in many video coding standards, the spatial size of such group of pixels is limited to some pre-defined values, e.g. $2^N \times 2^M$, where N and M are integer values. In this case, if one or few pixels cause the size of group pf pixels to increase from e.g. $2^N \times 2^M$ to $2^N \times 2^{M+1}$, said one or few pixels can preferably be removed to keep the size of block of pixels limited to $2^N \times 2^M$.

According to an embodiment, the maximum of the predetermined number of pixels is determined per patch by an algorithm. Herein, e.g. a rate-distortion optimization (RDO) algorithm may be used, wherein the RDO algorithm may consider the quality of the reconstructed content of the patch with and without the presence of removed pixel(s) and considering the reduction achieved in the bitrate and the extra bits required to signal the change. When there exists the possibility of removing one or more pixels to reduce the size of group of pixels to represent the patch, then those pixels may be removed, and the patch may be represented using a smaller group of pixels.

As a result, significant savings in the amount of data to be transmitted can be achieved. Especially, if the shape of the rectangular 2D block grids is defined as squares and their size is defined as $2^N$ x $2^N$ pixels, which is the case in many video coding standards. Thus, the difference of the amount of data between a 2D block grid of size $2^N$ x $2^N$ and a 2D block grid of size $2^{N+1}$ x $2^{N+1}$ is four-fold. Figure 6 shows an example, where one pixel of the patch forcing the patch to be projected on a 16x16 pixel block grid is removed and the size of group of pixels representing the remaining patch has changed from 16x16 to 8x8.

Accordingly, for the patches that include $n$ pixels that force the patch to be arranged into a larger 2D block grid for representing the patch, the algorithm may control said $n$ pixels to be removed from the patch and hence, a smaller size 2D block grid is selected to represent the patch. Alternatively, in the cases where $n$ pixels cause to increase the size of the group of pixels representing the patch by one row or column, based on an RDO algorithm, it is decided whether or not to remove said $n$ pixels.

According to an embodiment, the method further comprises applying a shifting to the reduced sized 2D patch for arranging said reduced sized 2D patch into the second rectangular 2D block grid. Thus, there may be cases where the change in the patch size, i.e. removal of $n$ pixels, requires a shifting to be applied to the patch to correctly align it with the borders of the group of pixels representing the said patch. Herein, a shifting value may be used to represent the new location of the patch in the group of pixels representing the patch.

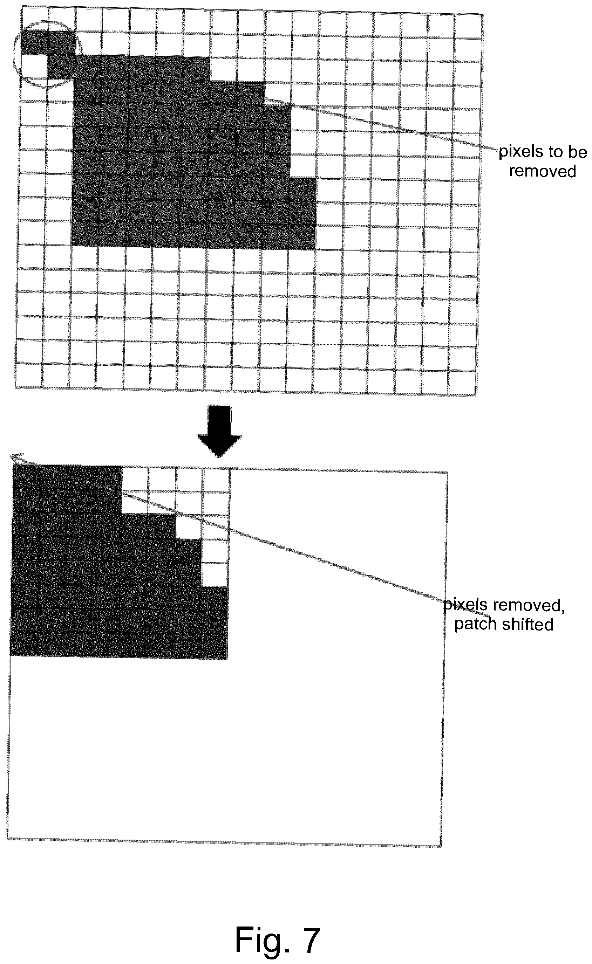

Figure 7 shows an example of combined removal of pixels and shifting of the patch. The original upper patch requires a 16x16 pixel block grid to be represented. The top-left three pixels of the original patch are removed from the patch and then the patch is shifted to left and top by two and three pixels, respectively. This will cause the new location of the patch to be limited to the new group of pixels representing the said patch.

According to an embodiment, the method further comprises applying a rotation to the reduced sized 2D patch for arranging said reduced sized 2D patch into the second rectangular 2D block grid. Hence, a rotation of the patch may be required after removing the n pixels from the patch to make sure that it can be covered using the dedicated group of pixels which is smaller than the original group of pixels representing the patch prior to its size reduction. This may happen in the cases where the group of pixels representing the patch do not have a square shape but have a rectangular shape.

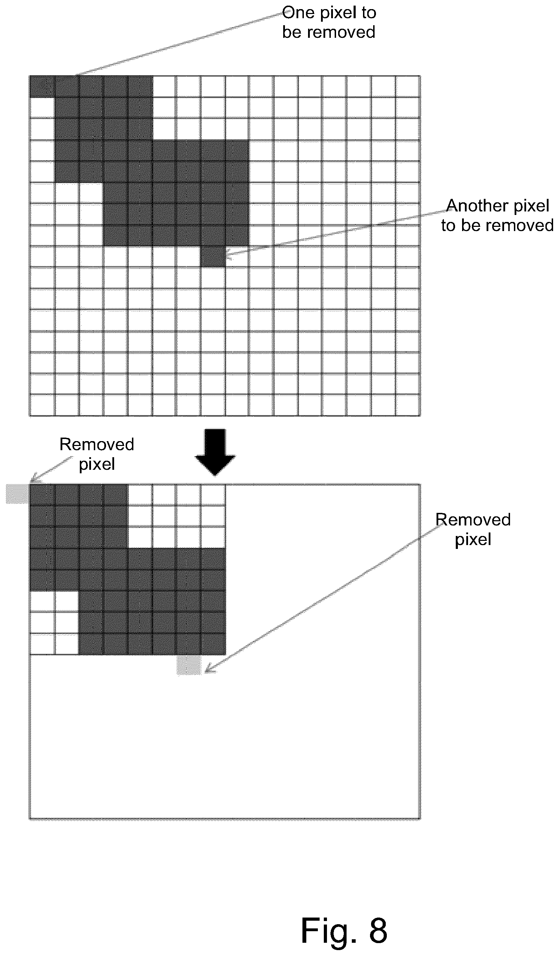

According to an embodiment, the method further comprises removing said pixels from a plurality of location of said at least one 2D patch. Accordingly, the patch size reduction may happen from at least two different locations of the patch, which are not necessarily adjacent. If the pixels are removed from two locations, then $n\text{-}k$ pixels are removed from one side and $k$ pixels are removed from another side (total $n$ pixels). As a result, a new patch is created which can fit to a smaller group of pixels. This is depicted in Figure 8, wherein, as a result of removal of two non-adjacent pixels, the size of group of pixels representing the patch is changed from 16x16 to 8x8.

In another embodiment, the rotation of patch and removal of one or more pixels from one or more locations, which may or may not be adjacent, can be combined to reduce the size of the patch and fit it to a designated group of pixels representing the said patch.

According to an embodiment, the method further comprises determining if the removed pixels are relevant for reconstructing the content of the patch, and if affirmative, including, in or along the bitstream, instructions for a decoder to reconstruct the content of the patch. For example, an RDO algorithm may make a decision whether or not the removed pixel(s) is an important pixel(s) which need to be reconstructed in the decoder side or not. The algorithm may consider the quality of the 2D grid including all patches to decide whether or not the removal of pixels is beneficial considering an RDO criteria. In this case, the quality of each patch is compared to the quality of the original patch prior to removal of the separated pixels. In another embodiment, the algorithm may e.g. consider the quality of the reconstructed patches with and without the presence of removed pixel(s) and, on the other hand, compare the reduction achieved in the bitrate and the extra bits required to signal the change. The reconstructed patches include residual information instructing the decoder how to reconstruct the patched. Based on the considerations, the algorithm may decide if it is needed to signal the change in the patch size/shape/orientation to the decoder or if the change can be ignored. In another embodiment, the 3D content may be created based on the patches and the residual information (i.e. signalled changes). The quality of the 3D content is then compared with the quality of the original 3D content and the reduced bitrate to needed to transmit the patches plus the bitrate required to transmit the residual information is compared to the bitrate required to transmit the information about the patched without removing any separated pixels. The RDO algorithm may decide 1) to apply or not to apply the removal of the separated pixel to the patches, 2) and in case the removal is applied, to include or not include the residual (change signal) information to the bitstream.

According to an embodiment, the separated pixels which are removed from one part of the patch may be relocated into another part of the group of pixels representing the patch. In this embodiment, none of the pixels are totally removed from the patch but they are only relocated to another part of the group of pixels representing the patch. This will target size reduction of group of pixels while keeping the pixel values of the patch intact. The residual information may be transmitted indicating how the relocation has been applied. Namely, this may mention that the pixels from location A with shape S have been moved to location B. A rotation also may be applied to the shape S when moving from location A to location B and this may also be indicated in the residual information.

In the first case, the encoder includes, in or along the bitstream, instructions, e.g. a few bits, to inform the decoder that such change has happened enabling the decoder to reconstruct the removed pixel(s). The instructions may be signalled e.g. in patch headers. In the latter case, the change in the patch size will not be communicated with the decoder and a maximum bitrate reduction is achieved, since no bits need to be reserved for the signalling.

According to an embodiment, said instructions for reconstructing the content of the patch indicates one or more of the following: the location, size, shape, orientation, direction, rotation of the removed pixel(s). Thus, the encoder creates a signal, which indicates besides the patch, but also at least one change caused by the removal of the pixel(s), such as the location, size, shape, orientation, direction, rotation of the removed pixel(s). The signalling may be carried out aligned with the lost pixel methodology used in lossless video-based PCC (V-PCC). Alternatively, any type of residual transmission can be considered to reflect the changes in the patch size to the decoder.

According to an embodiment, said instructions for reconstructing the content of the patch indicates all changes applied to the patch. Thus, the changes are accurately signalled to the decoder enabling the decoder to create an accurate reconstructed patch in the decoder side.

According to an embodiment, said instructions for reconstructing the content of the patch indicates a subset of changes applied to the patch. Thus, the patch change is partially signalled to the decoder. In this case, the decision on what aspects of the patch size change are to be communicated (signalled) may be made based on RDO algorithms. Depending on the application, it may be needed to accurately reconstruct the patch in decoder side, or alternatively, concentrate more on the bitrate reduction. Such RDO algorithms would consider several different combinations of how to signal the changes and considering the quality of the reconstructed patches or reconstructed 3D content a decision is made on what is to be signalled in the bitstream and to the decoder.

According to an embodiment, said instructions for reconstructing the content of the patch indicates the changes in patch location due to shifting or rotation.

The algorithm making decisions on the pixels to be removed, such as the RDO algorithm, may take various aspects of the video content, the patch properties and/or content providing infrastructure into account, when deciding if any pixel(s) are to be removed and if the removal shall be indicated to a decoder. The algorithm may make the decisions at least partly on the basis of the following features:

Motion:

Considering the amount of motion for the pixels considered for removal in the current patch, it is decided whether or not to remove said pixels from the patch.

High Frequency Components (HFCs):

Based on the amount of HFCs/details on pixels considered for removal from the patch, it is decided whether or not to removed said pixels from the patch.

Texture characteristics:

Based on the texture characteristic of a patch, it is decided whether or not to removed said pixels from the patch. E.g. a patch might have a large amount of motion or HFCs but if it is considered perceptually less important, pixels can be removed. Such a case might happen for patches representing dynamic textures such as foliage or grass.

Patch material information:

If a material information of a patch is available, e.g. as a signalled material attribute, such information can be used when it is decided whether or not to removed said pixels from the patch.

Closeness to the user:

In an embodiment, an initial viewing position is given, changes to this position might be updated periodically (i.e. client feedback to MPEG-DASH server). This is a criterion on the distance between that part of the object and the viewer. Considering that the objects and the user are moving in the scene, the distance between different parts of the objects in the scene are changed actively. Hence, in this embodiment, the closer the projected content on the patch to the user, the less the chances that the pixels of this patch are to be removed. Alternatively, if the decision is to remove the pixels of the patch, then their more accurate creation in the decoder side may be enabled by signalling the changes with high precision.

Region of Interest (ROI):

This embodiment includes defining patches used to cover any type of ROI in the scene e.g. if there exist any faces, written text, screens, etc., then the pixels of the patches which have projected those content should be kept intact by either not removing them at all, or signalling the applied changed accurately to enable the decoder to reconstruct them as accurately.

Manually indicating patches by user or content provider:

In another embodiment, the user or content provider may manually select at least one patch or part of the scene to indicate that said patch or patches representing the said part of the scene, may be kept intact. Meaning that they either don't have any pixel removal or changes are to be signalled accurately to the decoder.

Encoding/decoding process complexity:

The amount of encoding and/or decoding process complexity may also affect the application of this proposal. If less complexity of decoder is required, this method may be considered to be applied more. However, if less complexity in encoder is needed, then this method may be considered to be applied less.

Encoding/decoding required bitrate

Similar to encoding and/or decoding process complexity, the amount of bitrate required to encode each patch or the whole scene may also affect the utilization of this method. The higher bitrate reduction will force the encoder to use this method more.

Combination of at least two of the aforementioned embodiments

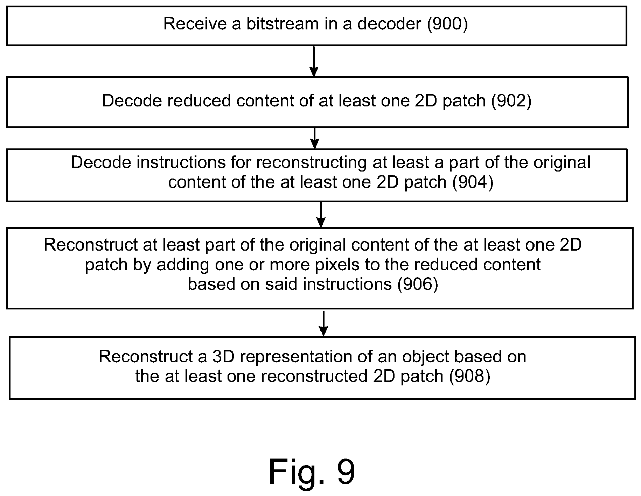

This embodiment, includes a combination of at least two of the aforementioned embodiments e.g. if a patch includes a part of the object which is moving fast (high motion) and also includes a face (ROI) then, the application of the method is affected accordingly and based on the requirement of the application e.g. less applying the method to keep the content with higher quality or alternatively, signalling the changes more accurately to reconstruct the changes better in the decoder side.
Consequently, the embodiments as described herein enable to reduce the bitrate for the patches to be transmitted. Moreover, the memory/buffer requirement in the decoder are reduced as the number of pixels to be decoded is decreased.
Further aspects relate to the operation of a decoder. Figure 9 shows an example of a decoding method comprising receiving (900) a bitstream in a decoder; decoding (902) reduced content of at least one 2D patch; decoding (904) instructions for reconstructing at least part of the original content of the at least one 2D patch; reconstructing (906) said at least part of the original content of the at least one 2D patch by adding one or more pixels to the reduced content based on said instructions; and reconstructing (908) a 3D representation of at least one object based on the at least one reconstructed 2D patch.
Thus, the decoder receives and decodes the reduced content of at least one 2D patch, from where one or more pixels have been removed. The decoder also receives and decodes the instructions for reconstructing at least part of the original content of the at least one 2D patch. As described above, said instructions for reconstructing the content of the patch may indicate all changes or a subset of changes applied to the patch. Then based on the instructions, the decoder reconstructs either at least part of the original content or the whole original content of the at least one 2D patch by adding one or more pixels to the reduced content. The 3D representation of one or more objects is then reconstructed based on the at least one reconstructed 2D patch.
An apparatus according to an aspect comprises at least one processor and at least one memory, said at least one memory stored with computer program code thereon, the at least one memory and the computer program code configured to, with the at least one processor, cause the apparatus at least to perform: project a 3D object represented by a point cloud frame onto at least one 2D patch; arrange all pixels of said at least one 2D patch onto a first rectangular 2D block grid having a first size; examine whether a removal of a maximum of a predetermined number of pixels from said at least one 2D patch enables arranging all pixels of said at least one 2D patch onto a second rectangular 2D block grid having a second size smaller than the first size; and if affirmative, reduce the size of said at least one 2D patch by removing at maximum said predetermined number of pixels.
An apparatus according to a further aspect comprises at least one processor and at least one memory, said at least one memory stored with computer program code thereon, the at least one memory and the computer program code configured to, with the at least one processor, cause the apparatus at least to perform: receive a bitstream in a decoder; decode reduced content of at least one 2D patch; decode instructions for reconstructing at least part of the original content of the at least one 2D patch; reconstruct said at least part of the original content of the at least one 2D patch by adding one or more pixels to the reduced content based on said instructions; and reconstruct a 3D representation of at least one object based on the at least one reconstructed 2D patch.
In the above, some embodiments have been described with reference to encoding. It needs to be understood that said encoding may comprise one or more of the following: encoding source image data into a bitstream, encapsulating the encoded bitstream in a container file and/or in packet(s) or stream(s) of a communication protocol, and announcing or describing the bitstream in a content description, such as the Media Presentation Description (MPD) of ISO/IEC 23009-1 (known as MPEG-DASH) or the IETF Session Description Protocol (SDP). Similarly, some embodiments have been described with reference to decoding. It needs to be understood that said decoding may comprise one or more of the following: decoding image data from a bitstream, decapsulating the bitstream from a container file and/or from packet(s) or stream(s) of a communication protocol, and parsing a content description of the bitstream,

In the above, some embodiments have been described with reference to blocks of a particular size (NxN) along a block grid. It needs to be understood that embodiments may be realized for non-square blocks (MxN) if the underlying coding system supports such. It also needs to be understood that embodiments may be realized with multiple block partitioning levels

In the above, where the example embodiments have been described with reference to an encoder or an encoding method, it needs to be understood that the resulting bitstream and the decoder or the decoding method may have corresponding elements in them. Likewise, where the example embodiments have been described with reference to a decoder, it needs to be understood that the encoder may have structure and/or computer program for generating the bitstream to be decoded by the decoder.

In the above, some embodiments have been described with reference to encoding or decoding texture pictures, geometry pictures, projection geometry information, and (optionally) attribute pictures into or from a single bitstream. It needs to be understood that embodiments can be similarly realized when encoding or decoding texture pictures, geometry pictures, projection geometry information, and (optionally) attribute pictures into or from several bitstreams that are associated with each other, e.g. by metadata in a container file or media presentation description for streaming.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

**Claims**

1. A method comprising:

   projecting a 3D representation of at least one object onto at least one 2D patch;
   arranging all pixels of said at least one 2D patch onto a first rectangular 2D block grid having a first size;
   examining whether a removal of a maximum of a predetermined number of pixels from said at least one 2D patch enables arranging all pixels of said at least one 2D patch onto a second rectangular 2D block grid having a second size smaller than the first size; and if affirmative reducing the size of said at least one 2D patch by removing at maximum said predetermined number of pixels.

2. An apparatus comprising:

   means for projecting a 3D representation of at least one object onto at least one 2D patch;
   means for arranging all pixels of said at least one 2D patch onto a first rectangular 2D block grid having a first size;
   means for examining whether a removal of a maximum of a predetermined number of pixels from said at least one 2D patch enables arranging all pixels of said at least one 2D patch onto a second rectangular 2D block grid having a second size smaller than the first size; and
   means for reducing the size of said at least one 2D patch by removing at maximum said predetermined number of pixels.

3. The apparatus according to claim 2, wherein the size of the rectangular 2D block grids is defined as $2^N \times 2^M$, where N and M are positive integer values.

4. The apparatus according to claim 2 or 3, further comprising
   means for determining the maximum of the predetermined number of pixels per patch by an algorithm.

5. The apparatus according to any of claims 2 - 4, further comprising

means for applying a shifting or a rotation to the reduced sized 2D patch for arranging said reduced sized 2D patch into the second rectangular 2D block grid.

6. The apparatus according to any of claims 2 - 5, further comprising
means for removing said pixels from a plurality of locations of said at least one 2D patch.

7. The apparatus according to any of claims 2 - 6, further comprising
means for determining if the removed pixels are relevant for reconstructing the content of the patch; and
means for including, in or along the bitstream, instructions for a decoder to reconstruct the content of the patch.

8. The apparatus according to claim 7, wherein said instructions for reconstructing the content of the patch indicates one or more of the following: the location, size, shape, orientation, direction, rotation of the removed pixels.

9. A method comprising:

receiving a bitstream in a decoder;
decoding reduced content of at least one 2D patch;
decoding instructions for reconstructing original content of the at least one 2D patch;
reconstructing the original content of the at least one 2D patch by adding one or more pixels to the reduced content based on said instructions; and
reconstructing a 3D representation of at least one object based on the at least one reconstructed 2D patch.

10. An apparatus comprising:
means for receiving a bitstream in a decoder;

means for decoding reduced content of at least one 2D patch;
means for decoding instructions for reconstructing original content of the at least one 2D patch;
means for reconstructing the original content of the at least one 2D patch by adding one or more pixels to the reduced content based on said instructions; and
means for reconstructing a 3D representation of at least one object based on the at least one reconstructed 2D patch.

11. The apparatus according to claim 10, wherein said instructions for reconstructing the original content of the patch indicates one or more of the following: the location, size, shape, orientation, direction, rotation of the removed pixels.

12. The apparatus according to claim 10 or 11, further comprising
means for applying a shifting or a rotation to the reconstructed 2D patch after adding said one or more pixels.

13. The apparatus according to any of claims 10 - 12, further comprising
means for adding said pixels to a plurality of locations of said at least one 2D patch.

Fig. 1a

Fig. 1b

Intra compression

# Fig. 2a

# Fig. 2b

B0xB0
sub-block

TxT block

# Fig. 3

Project a 3D representation of an object onto
at least one 2D patch (400)

Arrange all pixels of said at least one 2D patch onto a first
rectangular 2D block grid having a first size (402)

Examine if a removal of a maximum of a predetermined number of
pixels from said at least one 2D patch enables arranging all pixels of
said at least one 2D patch onto a second rectangular 2D block grid
having a second size smaller than the first size (404)

Reduce the size of said at least one 2D patch by removing
at maximum said predetermined number of pixels (406)

# Fig. 4

Fig. 5

pixel to be removed

Fig. 6

removed pixel

pixels to be
removed

pixels removed,
patch shifted

Fig. 7

One pixel to
be removed

Another pixel
to be removed

Removed
pixel

Removed
pixel

# Fig. 8

Receive a bitstream in a decoder (900)

↓

Decode reduced content of at least one 2D patch (902)

↓

Decode instructions for reconstructing at least a part of the original content of the at least one 2D patch (904)

↓

Reconstruct at least part of the original content of the at least one 2D patch by adding one or more pixels to the reduced content based on said instructions (906)

↓

Reconstruct a 3D representation of an object based on the at least one reconstructed 2D patch (908)

# Fig. 9

Europäisches
Patentamt

European
Patent Office

Office européen
des brevets

# EUROPEAN SEARCH REPORT

Application Number

EP 20 15 4219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUEDE (TECHNICOLOR) C ET AL: "[PCC] new proposal: Improve point cloud compression through occupancy map refinement", 124. MPEG MEETING; 20181008 - 20181012; MACAO; (MOTION PICTURE EXPERT GROUP OR ISO/IEC JTC1/SC29/WG11) , no. m44779 4 October 2018 (2018-10-04), XP030192434, Retrieved from the Internet: URL:http://phenix.int-evry.fr/mpeg/doc_end _user/documents/124_Macao/wg11/m44779-v2-m 44779-Improvepointcloudcompressionthrougho ccupancymaprefinement-v1.1.zip m44779 - Improve point cloud compression through occupancy map refinement - v1.1.docx [retrieved on 2018-10-04] | 1-4,6,7, 9,10,13 | INV. G06T9/00 |
| Y | * sections 1 -3.1 with figures 1-4 * | 5,8,11, 12 | |
| X | DEJUN ZHANG (HUAWEI) ET AL: "[VPCC] New proposal of an adaptive outlier removing method", 124. MPEG MEETING; 20181008 - 20181012; MACAO; (MOTION PICTURE EXPERT GROUP OR ISO/IEC JTC1/SC29/WG11) , no. m44766 4 October 2018 (2018-10-04), XP030192427, Retrieved from the Internet: URL:http://phenix.int-evry.fr/mpeg/doc_end _user/documents/124_Macao/wg11/m44766-v1-m 44766.zip m44766.docx [retrieved on 2018-10-04] | 1,2,9,10 | TECHNICAL FIELDS SEARCHED (IPC) G06T |
| Y | * sections 1 and 2 with figures 1-4 * | 5,8,11, 12 | |
| A | | 3,4,6,7, 13 | |

-/--

The present search report has been drawn up for all claims

| Place of search | Date of completion of the search | Examiner |
|---|---|---|
| Berlin | 30 June 2020 | Heising, Guido |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 1 of 3

Europäisches
Patentamt

European
Patent Office

Office européen
des brevets

# EUROPEAN SEARCH REPORT

Application Number

EP 20 15 4219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEIKHI-POUR NAHID ET AL: "Efficient 2D Video Coding of Volumetric Video Data", 2018 7TH EUROPEAN WORKSHOP ON VISUAL INFORMATION PROCESSING (EUVIP), IEEE, 26 November 2018 (2018-11-26), pages 1-5, XP033499743, DOI: 10.1109/EUVIP.2018.8611742 [retrieved on 2019-01-14] | 1,2,9,10 | |
| A | * section III. with figures 1,3 and 4 * | 3-8, 11-13 | |
| Y | "CE 2.18 on patch packing", 123. MPEG MEETING; 20180716 - 20180720; LJUBLJANA; (MOTION PICTURE EXPERT GROUP OR ISO/IEC JTC1/SC29/WG11) , no. n17871 17 August 2018 (2018-08-17), XP030190655, Retrieved from the Internet: URL:http://phenix.int-evry.fr/mpeg/doc_end_user/documents/123_Ljubljana/wg11/w17871.zip w17871.docx [retrieved on 2018-08-17] | 5,8,11, 12 | |
| A | * sections 2.2 - 2.5 with figures "2-3" and "2-4" and table "2-1" * | 1-4,6,7, 9,10,13 | TECHNICAL FIELDS SEARCHED (IPC) |

-/--

The present search report has been drawn up for all claims

| Place of search | Date of completion of the search | Examiner |
|---|---|---|
| Berlin | 30 June 2020 | Heising, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 15 4219

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "PCC Test Model C2 v2", 122. MPEG MEETING; 20180416 - 20180420; SAN DIEGO; (MOTION PICTURE EXPERT GROUP OR ISO/IEC JTC1/SC29/WG11) , no. n17526 16 July 2018 (2018-07-16), XP030197446, Retrieved from the Internet: URL:http://phenix.int-evry.fr/mpeg/doc_end _user/documents/122_San Diego/wg11/w17526.zip w17526_TMC2_AlgorithmDescription.docx [retrieved on 2018-07-16] * section 2 - 2.5 * ----- | 1-13 | |

TECHNICAL FIELDS
SEARCHED     (IPC)

The present search report has been drawn up for all claims

| Place of search | Date of completion of the search | Examiner |
|---|---|---|
| Berlin | 30 June 2020 | Heising, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)